(19) Europäisches Patentamt
European Patent Office
Office européen des brevets

(11) **EP 1 725 716 B1**

(12) **EUROPÄISCHE PATENTSCHRIFT**

(45) Veröffentlichungstag und Bekanntmachung des Hinweises auf die Patenterteilung:
**04.01.2017 Patentblatt 2017/01**

(21) Anmeldenummer: **05715681.2**

(22) Anmeldetag: **03.03.2005**

(51) Int Cl.:
*E04B 1/84* (2006.01)    *E04B 1/94* (2006.01)
*G10K 11/162* (2006.01)    *B60R 13/08* (2006.01)
*B32B 3/26* (2006.01)

(86) Internationale Anmeldenummer:
**PCT/EP2005/002219**

(87) Internationale Veröffentlichungsnummer:
**WO 2005/090699 (29.09.2005 Gazette 2005/39)**

(54) **SCHALLSCHUTZELEMENT AUS MINDESTENS ZWEI SCHICHTEN, VERFAHREN ZU SEINER FLAMM-HEMMENDEN AUSRÜSTUNG UND SEINE VERWENDUNG**

SOUND INSULATION ELEMENT CONSISTING OF AT LEAST TWO LAYERS, METHOD FOR THE FIREPROOFING THEREOF AND USE THEREOF

ELEMENT D'INSONORISATION COMPOSE D'AU MOINS DEUX COUCHES, PROCEDE D'IGNIFUGATION DUDIT ELEMENT ET UTILISATION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **09.03.2004 DE 102004011287**

(43) Veröffentlichungstag der Anmeldung:
**29.11.2006 Patentblatt 2006/48**

(73) Patentinhaber: **Kalle GmbH**
**65203 Wiesbaden (DE)**

(72) Erfinder:
• **MANS, Leo**
**55120 Mainz (DE)**
• **NEY, Paul, Edward**
**65191 Wiesbaden (DE)**

(74) Vertreter: **Zounek, Nikolai et al**
**Plate Schweitzer Zounek**
**Patentanwälte**
**Rheingaustrasse 196**
**65203 Wiesbaden (DE)**

(56) Entgegenhaltungen:
EP-A- 0 563 536    DE-A1- 3 724 744
DE-C1- 4 437 196    GB-A- 409 502
JP-A- 8 087 278    US-A- 2 096 233
US-A- 4 370 249

• **PATENT ABSTRACTS OF JAPAN Bd. 1996, Nr. 06, 28. Juni 1996 (1996-06-28) & JP 08 045256 A (NEC CORP), 16. Februar 1996 (1996-02-16)**

EP 1 725 716 B1

**Beschreibung**

Die Erfindung betrifft ein Schallschutzelement aus mindestens zwei Schichten, von denen eine Schicht aus einem flexiblen Material dem Schallschutz dient und die andere Schicht Trägerschicht für das flexible Material ist.

Bei Gebäuden werden Decken von Innenräumen im Allgemeinen mit einem Schallschutz ausgerüstet. Dies gilt auch für Hohlräume von Gehäusen von lärmerzeugenden Maschinen und Hohlräume von Automobilkarosserien, Abdeckungen und Verkleidungen schallerzeugender Geräte, die durch geeignete Mittel schallisolierend ausgerüstet werden müssen.

Es ist bekannt zur Schallabsorption von Decken in Gebäuden dünne luftdurchlässige Faservliese auf gelochte Gipskartonplatten oder Langlochplatten aus Metall aufzukleben. Die Dicke dieser Faservliese beträgt im Allgemeinen weniger als 1 mm. Derartige Schallschutzelemente werden in einem vorgegebenen Abstand unterhalb der Raumdecken montiert. Je nach Höhe des Hohlraumes zwischen dem Schallschutzelement und der Raumdecke erhält man unterschiedliche frequenzabhängige Schallabsorptionsgrade. Die Güte der Schallabsorption ist dabei direkt abhängig von der Planlage der Faservliese auf den Platten, wobei die Schallabsorption durch Auflage von Mineralfaserplatten auf die Faservliese gesteigert werden kann. Solche Schallschutzelemente sind somit mehrschichtig aufgebaut.

Grundsätzlich werden Schallabsorptionssysteme, die sich aus einer Vielzahl von Schallschutzelementen zusammen setzen, nicht nur für Raumdecken, sondern auch für Raumwände und Raumböden, eingesetzt. Auf Grund des Einsatzes von Schallabsorptionssystemen in Wohn- und Arbeitsgebäuden sowie Schulen und Krankenhäusern müssen diese mindestens die Brandschutzklasse B erfüllen, d. h. schwer entflammbar sein.

Bekannte Schallschutzelemente, die Faservliese als Schallschutz anwenden, haben einen Schallabsorptionsgrad von etwa 0,77 bei einer Frequenz von 800 Hertz, wie Messungen im Kundt'schen Rohr ergaben. Bei einer Steigerung der Frequenz auf 1600 Hertz fällt der Schallabsorptionsgrad auf 0,43 ab.

Aus der DE 196 35 214 C2 ist ein mehrschichtiger Folien-Dämmstoff für Wärmeisolation und Schallschutz, bestehend aus mindestens zwei Trennschichten, für die flexible Materialen wie Folien, Vliesstoff, Papier oder dergleichen eingesetzt werden, bekannt. Zwischen den Trennschichten befinden sich Distanzelemente aus senkrecht zu den Trennschichten orientierten, einzelnen und freistehenden Distanzfasern, wobei jede Trennschicht mindestens auf einer Seite mit Enden der Distanzfasern verbunden ist.

Aus der DE 199 54 779 A1 ist ein mehrlagiges flexibles Vlies- und Folienverbundsystem bekannt, bei dem das Vlies als Schallschutzmedium aus der Gruppe Hanf, Jute, Flachs, Baumwolle, Viskose, Zellstoff, Kork ausgewählt ist. Eine hydrophobe Sperrschicht aus ähnlichen Fasern oder einem Papier ist mit einem Flammschutz ausgestattet und für den Einsatz in Kraftfahrzeug-Innen- und Karosseriebereich, im Verpackungs-, Architektur-, Hausbau-, Medizin-, Filtrations- und Hygienebereich vorgesehen.

In der JP-A 08-087278 ist ein Schallschutzelement mit einem Trägermaterial und einer darauf befestigten schallabsorbierenden Schicht aus einem porösen Material offenbart. Die Schicht kann flammhemmend ausgerüstet sein. Konkret genannt als poröse Materialien sind verfestigte Faservliese, daneben auch - vorzugsweise offenzellige - Schäume. Polyurethan- und Polystyrol-Schäume sind speziell genannt. Bei den Fasern kann es sich um Cellulosefasern (®Tencel) handeln, Schwämme oder Schwammtücher auf Cellulosebasis sind dagegen nicht beschrieben.

Aufgabe der Erfindung ist es, ein Schallschutzelement so weiter zu entwickeln, dass es einen höheren durchschnittlichen Schallabsorptionsgrad über einen vorgegebenen Frequenzbereich als herkömmliche Schallschutzelemente hat, die mit Faservliesen ausgestattet sind. Dabei soll das schallabsorbierende Material flexibel sein, geringes Gewicht, variable geringe Dicke und einen für seinen Einsatzzweck ausreichendenden Flammschutz besitzen.

Die Lösung der Aufgabe erfolgt durch ein Schallschutzelement aus mindesten zwei Schichten, von denen eine Schicht (2) aus einem flexiblen Material dem Schallschutz dient und die andere Schicht eine Trägerschicht (3; 5; 6; 8) für das flexible Material ist, dadurch gekennzeichnet, dass das flexible Material der einen_Schicht (2) aus Schwammtuch besteht, deren Hauptbestandteil regenerierte oder nichtderivatisierte Zellulose ist und dass der Schicht (2) eine oder mehrere flammhemmende Substanzen zugesetzt sind:

Die Schicht (2) weist zweckmäßigerweise eine Trockendicke von 0,5 bis 23 mm auf. In Ausgestaltung der Erfindung besteht die Schicht aus einem im Trockenzustand 0,5 bis 8 mm dicken Schwammtuch. Das Flächengewicht des trockenen Schwammtuches beträgt im Allgemeinen 70 bis 700 g/m$^2$. Da Schwammtuch und Schwamm bekannterweise Wasser aufnehmen können, ist es möglich das Schallschutzelement auch in Feuchträumen einzusetzen. Vorteilhafterweise beträgt die Wasseraufnahme des Schwammtuches 1,8 bis 11 1/m$^2$ und die des Schwammes 12 bis 23 1/m$^2$. In bevorzugter Weise besteht das Schwammtuch aus regenerierter Zellulose, verstärkt durch Baumwollfasern, Viskosefasern oder ein Netz aus Kunststoff oder Baumwolle.

Die Schwammtuchherstellung nach dem Viskoseverfahren ist seit langem bekannt und u. a. in der EP -B1 035 794 beschrieben. Beim Viskoseverfahren wird zunächst Zellstoff, insbesondere Holzzellstoff, mit Natriumhydroxid und Schwefelkohlenstoff in eine alkalische Zellulose-xanthogenat-Lösung, die sogenannte Viskoselösung übergeführt. Parallel dazu werden Baumwollfasern bzw. -kämmlinge mit verdünnter, detergentienhaltiger NAOH entfettet. Die gereifte Viskoselösung wird dann mit diesen Baumwollfasern in einem Kneter vermischt. An Stelle von Baumwollfasern können auch Viskosefasern als innere Verstärkung verwendet werden. Anschließend wird Glaubersalz (= Natriumsulfat-Decahydrat) hinzu gefügt und ebenfalls gleichmäßig vermischt. Diese Schwammtuch-Rohmasse wird auf einen Träger, beispielsweise ein gelochtes Endlosband, in der gewünschten Dicke aufgetragen. Es ist auch möglich, eine Mischung aus Viskoselösung und Glaubersalz auf ein Trägermaterial aus Baumwolle oder Kunststoff, beispielsweise ein Netz aus Polyethylenterephthalat (PET) aufzutragen. Die Regenerierung der Zellulose erfolgt in einem erwärmten alkalischen Koagulationsbad, kann aber auch in einem sauren Medium, beispielsweise verdünnter Schwefelsäure, durchgeführt werden. Dabei werden die Baumwoll- oder Viskosefasern in den Schwammtuchkörper eingebunden. Da das Glaubersalz einen sehr niedrigen Schmelzpunkt hat, wird es in dem erwärmten Koagulationsbad aufgeschmolzen und herausgelöst. An Stelle der Salzkristalle bleiben Poren und Hohlräume zurück, die im trockenen Zustand, in dem sie mit Luft gefüllt sind, eine Wärmedämmung bewirken. In einer feuchten Umgebung können diese Poren und Hohlräume Feuchtigkeit aufnehmen. Zuletzt wird das Schwammtuch ausgewaschen, um es von Salzresten und anhaftenden Produkten zu befreien. Nach dem Trocknen wird es in schmale Bahnen geschnitten, die aufgerollt gelagert werden können. Die Rollenware wird dann zu Stücken der gewünschten Abmessungen konfektioniert.

In jüngerer Zeit erfolgt die Herstellung eines mit einer Innenverstärkung versehenen Schwammtuches auf Basis von Zellulose nach dem Aminoxid-Verfahren. Hierzu wird eine Mischung aufbereitet, die im N-Oxid eines tertiären Amins und Wasser gelöste Zellulose sowie mindestens einen Porenbildner und Fasern, jedoch kein Treibmittel, enthält. Die Mischung wird auf ein Transportband gestrichen und durch ein Koagulationsbad aus einer verdünnten wässrigen Aminoxid-Lösung, die den Porenbildner herauslöst, geführt. Das verbleibende Aminoxid wird ausgewaschen, die Schwammtuchbahn getrocknet und anschließend konfektioniert. Die Mischung kann nicht nur auf einer Seite, sondern auf beiden Seiten eines Netzes aus Kunststoff oder Baumwolle aufgetragen werden. Das bei diesem Verfahren verwendete N-Oxid eines tertiären Amins ist N-MethylMorpholin-N-Oxid.

Die im Schallschutzelement eingesetzten Schwämme können nach verschiedenen Verfahren hergestellt werden.

Bei den nach dem Viskoseverfahren hergestellten Schwämmen wird die Zellulose mit Schwefelkohlenstoff und Natronlauge zu Zellulosexanthogenat derivatisiert. Die erhaltene Viskoselösung wird dann mit einem Porenbildner, z. B. Glaubersalz, gegebenenfalls mit Verstärkungsfasern und/oder Treibmitteln vermischt. Die Mischung wird zu einer Schicht geformt und die Zellulose in einem stark alkalischen oder sauren Bad aus dem Zellulosexanthogenat regeneriert. Die Treibmittel bilden die für Schwämme typisch großen Poren und sind imstande, sowohl Makro- als auch Mikroporen in den Schwämmen während der Fällung der gelösten Cellulose zu formen. Die Schwämme unterscheiden sich von Schwammtüchern vor allem durch ihre nicht homogene Porenverteilung sowie unterschiedlich große Poren und geringere Dichte, die im allgemeinen, ohne Verstärkungsfasern oder textilem Stoff als Einlage, im Bereich von 20 bis 50 kg/m$^3$ liegt.

Bei einem der Herstellungsverfahren für Schwämme ist ein Gelierungsschritt erforderlich, der durch Lithium-, Natrium-, Kalium-, Magnesium- oder andere Metallionen bewirkt wird. Dabei nimmt die Viskosität der Lösung zu, bis ein Gelzustand erreicht ist. Der Gelierschritt ist entscheidend für die Struktur und Eigenschaften des Endprodukts.

Die Schicht aus dem Schwammtuch oder Schwamm ist zweckmäßigerweise punktförmig auf die Trägerschicht aufgeklebt.

Weiterbildungen und Ausführungen der Erfindung sind Gegenstand der Unteransprüche 8 bis 14.

Im Rahmen der vorliegenden Aufgabe wird auf ein Schwammtuch oder einen Schwamm eine Dispersion aus flammhemmenden Substanzen durch Eintauchen des Schwammtuches oder des Schwammes in die Dispersion und anschließendes Trocknen aufgebracht, d. h. in diesem Fall wird auf das fertige Schwammtuch oder den Schwamm nachträglich die Dispersion aufgetragen. In einer Variante des Verfahrens wird eine Dispersion aus flammhemmender Substanz bzw. flammhemmenden Substanzen zusammen mit Zellulose so aufbereitet, dass die Dispersion einer Spinnlösung der Viskose, aus der das Schwammtuch bzw. der Schwamm hergestellt wird, zugesetzt wird. Grundsätzlich gilt für die Erfindung, dass Schwammtuch bzw. Schwamm als schallabsorbierendes Material Anwendung findet. Insbesondere wird Schwammtuch oder Schwamm in einem Schallschutzelement als schallabsorbierendes Material verwendet und auf die Trägerschicht des Schallschutzelements aufgebracht und mit der Trägerschicht punktuell, streifenförmig oder vollflächig verbunden, beispielsweise durch Verkleben.

Durch die Erfindung wird der Vorteil erzielt, dass bei Einsatz von Schwammtuch oder Schwamm in Schallschutzelementen die Schallabsorption in einem vorgegebenen Frequenzbereich höher als bei Einsatz von Faservliesen ist. Durch die Wahl der Dicke und der Dichte bzw. des Flächengewichts des Schwammtuches oder des Schwammes kann der Schallabsorptionsgrad für verschiedene Frequenzbereiche optimiert werden, d. h. die größtmögliche Schallabsorption für den jeweiligen Frequenzbereich eingestellt werden. Es gilt ganz allgemein, dass durch den Einsatz von Schwammtuch oder Schwamm Schallabsorptionsgrade erreicht werden, welche diejenigen der Faservliese übertreffen. Voraussetzung für den Einsatz von Schwammtuch oder Schwamm in Schallschutzelementen, die in Gebäuden zur Anwendung kommen, aber auch als schallabsorbierende Materialien in Abdeckungen und Verkleidungen von Maschinen, Geräten, Kraftfahrzeugkarosserien und dergleichen, ist die Ausrüstung des Schwammtuches oder des Schwammes mit flammhemmenden Substanzen, so dass die Schallschutzelemente nur schwer entflammbar sind.

Die Erfindung wird im Folgenden an Hand der Zeichnungen von Ausführungsbeispielen näher erläutert. Es zeigen in perspektivischer Ansicht:

Figur 1    eine erste Ausführungsform eines Schallschutzelementes, umfassend eine gelochte Gipskartonplatte und eine Schicht aus Schwammtuch oder Schwamm, die teilweise aufgebrochen ist;

Figur 2    eine zweite Ausführungsform eines Schallschutzelementes, umfassend eine vollflächige Gipskartonplatte und eine teileweise aufgebrochene Schicht aus Schwammtuch oder Schwamm;

Figur 3    eine dritte Ausführungsform eines Schallschutzelementes, umfassend eine metallische Langlochplatte und eine teileweise aufgebrochene Schicht aus Schwammtuch oder Schwamm;

Figur 4    eine vierte Ausführungsform eines Schallschutzelementes, umfassend eine gelochte Gipskartonplatte oder eine metallische Langlochplatte und Streifen aus Schwammtuch oder Schwamm;

Figur 5    eine fünfte Ausführungsform eines Schallschutzelementes, umfassend ein Netz aus Kunststoff oder Baumwolle, das beidseitig mit je einer Schicht aus Schwammtuch oder Schwamm verbunden ist; und

Figur 6    schematisch eine punktuelle Verteilung von Verbindungspunkten aus Klebemittel auf einer Trägerschicht.

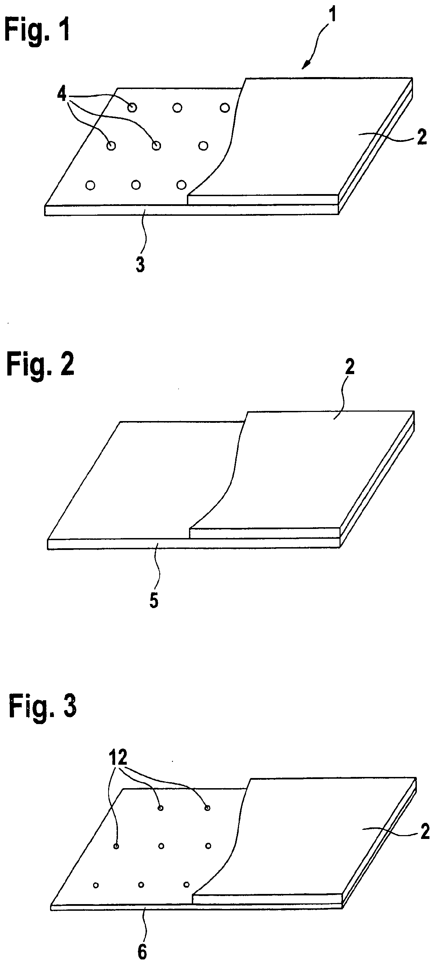

Eine erste Ausführungsform eines Schallschutzelementes 1 ist perspektivisch in Fig. 1 dargestellt. Das Schallschutzelement weist zwei Schichten auf, von denen eine Trägerschicht 3 beispielsweise starr ist und eine flexible Schicht 2 aus einem Schwammtuch oder Schwamm besteht. Die Schicht 2 ist mit der Trägerschicht 3 verbunden und besitzt als Schwammtuch eine Trockendicke von 0,5 bis 8 mm und als Schwamm eine Trockendicke von 9 bis 23 mm. Bei der Trägerschicht 3 handelt es sich um eine gelochte Gipskartonplatte, die Löcher 4 aufweist, die beispielsweise gleichmäßig spalten- und reihenförmig angeordnet sind. Die Durchmesser der Löcher 4 liegen im Bereich von 1 bis 5 mm. In Fig. 1 ist die Schicht 2 aus dem Schwammtuch bzw. Schwamm teilweise gebrochen dargestellt, so dass die Löcher 4 der Trägerschicht 3 sichtbar sind. Das Raster der Löcher 4 ist gleichmäßig, d. h. die Abstände zwischen den Löchern sind in allen Richtungen amnähernd gleich groß. Bevorzugt hat die Schicht 2 als Schwammtuch im trockenen Zustand eine Dicke von 0,5 bis 6 mm. Das Flächengewicht des trockenen Schwammtuches beträgt 70 bis 700 $g/m^2$, während der Schwamm ein Flächengewicht von 500 bis 1050 $g/m^2$ besitzt. Das Schwammtuch besteht aus regenerierter Zellulose, die durch Baumwollfasern, Viskosefasern oder ein Netz aus Kunststoff oder Baumwolle verstärkt ist. Des Weiteren werden Schwammtücher auf Zellulosebasis eingesetzt, die nach dem Aminoxidverfahren mit mindestens einem Porenbildner hergestellt sind. Derartige Schwammtücher sind gleichfalls mit einer Innenverstärkung aus Baumwollfasern, Viskosefasern oder einem Netz aus Kunststoff oder Baumwolle ausgerüstet. Bekannterweise können Schwammtücher große Mengen an Feuchtigkeit, sprich Flüssigkeit, aufnehmen. Die Wasseraufnahme der verwendeten Schwammtücher liegt im Bereich von 1,8 bis 11 $1/m^2$, die des Schwammes im Bereich von 12 bis größer 22 $1/m^2$.

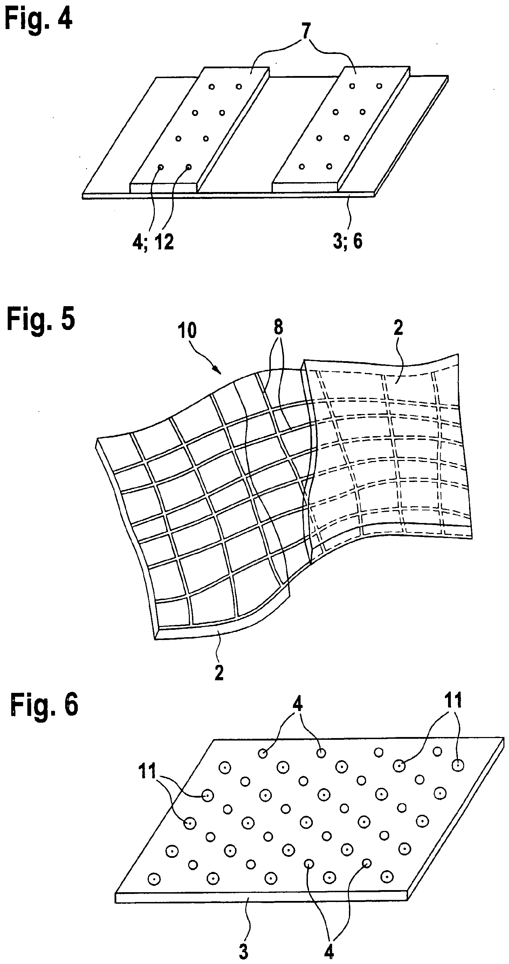

Fig. 2 zeigt eine zweite Ausführungsform eines Schallschutzelementes, das aus einer Trägerschicht in Gestalt einer vollflächigen Gipskartonplatte 5und einer Schicht 2 aus Schwammtuch oder Schwamm besteht. Die Gipskartonplatte ist aus dem gleichen Material wie die Gipskartonplatte der ersten Ausführungsform gefertigt, mit dem einzigen Unterschied, dass sie keine Löcher enthält. Die Schicht 2 ist bei der ersten und zweiten Ausführungsform gemäß den Figuren 1 und 2 punktförmig auf die Trägeschicht 3 bzw. 5 aufgeklebt. In Fig. 6 ist schematisch die punktuelle Verteilung von Verbindungspunkten, die aus Klebemittel bestehen, auf der Trägerschicht 3 dargestellt. Die Verbindungspunkte aus dem Klebemittel sind als Ringe 11 mit ihrem Mittelpunkt eingezeichnet, um sie von den Löchern 4 der gelochten Gipskartonplatte 3 unterscheidbar zu machen. Die punktuelle Geometrie der Verbindungspunkte, wie in Fig. 6 gezeigt, gilt selbstverständlich auch für die volle Gipskartonplatte 5 gemäß Fig. 2. Die punktuelle Verteilung des Klebemittels erfolgt mittels Schablone und Rakel, Rotations-Siebdruck oder durch Schablone und Druckwalze. Selbstverständlich kann das Klebemittel auch vollflächig auf die Trägerschicht aufgetragen werden, so dass die Schicht 2 aus Schwammtuch oder Schwamm flächendeckend, d. h. vollflächig, mit der Trägerschicht 3 oder 5 verklebt ist.

Des Weiteren besteht das Schwammtuch auf Zellulosebasis aus nicht derivatisierter Zellulose, hergestellt nach dem Aminoxidverfahren mit mindestens einem Porenbildner und ist durch Baumwollfasern, Viskosefasern oder ein Netz aus Kunststoff oder Baumwolle verstärkt.

Eine dritte Ausführungsform eines Schallschutzelementes besteht aus einer Trägerschicht 6 in Gestalt einer metallischen Langlochplatte und einer Schicht 2 aus Schwammtuch oder Schwamm, wie in Fig. 3 gezeigt. Das Schwammtuch bzw. der Schwamm ist teilweise aufgebrochen dargestellt. Die Langlochplatte weist Löcher 12 auf, die beispielsweise einen Lochdurchmesser von 3 bis 5 mm besitzen, bei einer Blechdicke von 0,5 bis 0,6 mm. Der Lochanteil an der Gesamtfläche der Langlochplatte 6 beträgt 20 bis 40 %, insbesondere 30 %. Bei der Trägerschicht 3 bzw. 5 in Gestalt einer gelochten Gipskartonplatte bzw. einer vollflächigen Gipskartonplatte liegt der Lochanteil im Bereich von 0 bis 40 % der Gesamtfläche der jeweiligen Trägerschicht. Der Lochanteil von 0 % gilt dann für die vollflächige Trägerschicht 5, d. h. für die vollflächige Gipskartonplatte. Die Schicht 2 aus Schwammtuch bzw. Schwamm ist an und für sich eine plane, nicht gelochte Schicht, die als Schwammtuch sehr gleichmäßige Poren aufgrund der Herstellungsweise mit Porenbildnern enthält, wobei die Durchmesser dieser Poren nur geringe Abweichungen voneinander aufweisen. Im Schwamm dagegen sind die Poren stark unterschiedlich groß.

Eine vierte Ausführungsform eines Schallschutzelementes besteht aus einer gelochten Gipskartonplatte 3 oder einer metallischen Langlochplatte 6, auf der Streifen 7 aus Schwammtuch bzw. Schwamm aufgebracht sind, wie dies schematisch in Fig. 4 dargestellt ist. Die Streifen 7 aus Schwammtuch bzw. Schwamm decken jeweils zwei oder mehrere Spalten von Löchern 4 bzw. 12 ab.

Eine weitere, fünfte Ausführungsform eines Schallschutzelementes besteht aus einem Netz 8 aus Baumwolle oder Kunststoff, beispielsweise Polyethylenterephthalat (PET), das beidseitig mit je einer Schicht 2 aus Schwammtuch oder Schwamm verbunden ist. Das Netz 8 ist gitterförmig ausgestaltet und in den Gitterpunkten des Netzes wird das Klebemittel aufgebracht, das die Schichten 2, 2 mit dem Netz 8 dauerhaft verbindet. Diese Ausführungsform des Schallschutzelementes ist flexibel und vor allem für den Einsatz in Abdeckungen und Verkleidungen von Maschinen und Geräten sowie von Kraftfahrzeugkarosserien als Schalldämmmaterial vorgesehen. Selbstverständlich kann an Stelle von drei Schichten das Schallschutzelement auch aus zwei Schichten aufgebaut sein, nämlich dem Netz 8 aus Baumwolle oder Kunststoff und einer einzigen Schicht 2 aus Schwammtuch oder Schwamm, die eine Seite des Netzes 8 abdeckt und mittels Klebemittel mit dem Netz 8 verbunden ist.

In Ausgestaltung der Erfindung wird jede der Schichten 2 aus Schwammtuch oder Schwamm flammhemmend ausgerüstet. Dadurch werden die Schichten 2 schwer entflammbar gemäß der Brandschutzklasse B1. Die flammhemmende(n) Substanz(en) wird oder werden in einer Menge von 15 bis 25 Gew.-%, insbesondere 20 Gew.-%, bezogen auf das Zellulosegewicht des Schwammtuches bzw. des Schwammes, zugesetzt. Als flammhemmende Substanzen kommen organische, halogenfreie Phosphorverbindungen, Borsalze und bedingt halogenierte Kohlenwasserstoffe in Frage. Bevorzugt sind organische, halogenfreie Phosphorverbindungen, die beispielsweise in Polyethercarboxylsäure dispergiert sind. Diese Dispersionen sind schwach anionisch aktiv und haben einen pH-Wert von 7,5 bis 8,5. Derartige flammhemmende Substanzen werden beispielsweise als wässrige Dispersion der Spinnmasse aus Viskose bei der Herstellung des Schwammtuches bzw. des Schwammes zugesetzt. Es handelt sich um handelsübliche Dispersionen wie EXOLIT® der Firma Clariant Huningue S.A., Frankreich. Derartige Dispersionen aus flammhemmenden Substanzen werden beispielsweise auch auf das fertige Schwammtuch bzw. den Schwamm aufgebracht, indem das Schwammtuch bzw. der Schwamm in eine derartige Dispersion eingetaucht und anschließend getrocknet wird. Wie schon zuvor erwähnt, kann die Dispersion aus einer oder mehreren flammhemmenden Substanzen schon während der Herstellung des Schwammtuches bzw. des Schwammes zugesetzt werden, indem die Dispersion zusammen mit regenerierter oder nicht derivatisierter Zellulose einer Spinnlösung der Viskose, aus der das Schwammtuch bzw. der Schwamm hergestellt wird, hinzugefügt wird.

Im Rahmen der Erfindung wird ein Schwammtuch oder ein Schwamm als schallabsorbierendes Material verwendet. Diese Verwendung ist neu, da Schwammtücher oder Schwämme im Allgemeinen in erster Linie für Reinigungszwecke, insbesondere zum Aufsaugen von größeren Flüssigkeitsmengen, eingesetzt werden. Insbesondere die Verwendung eines Schwammtuches oder eines Schwammtuches als schallabsorbierendes Material in einem Schallschutzelement, in dem das Schwammtuch bzw. der Schwamm auf einer Trägerschicht aufgebracht und mit dieser punktuell, streifenförmig oder vollflächig verbunden ist, ist im Stand der Technik bisher nicht bekannt.

Beispiele

Es wurden von verschiedenen Schwammtuch-Typen, die jeweils auf ein gelochtes Metallblech aufkaschiert waren, die Schallabsorptionsgrade in einem Kundt'schen Rohr, einem sogenannten Impedanz-Rohr nach DIN EN ISO 10534-1 gemessen. Zum Vergleich wurde zusätzlich eine Referenzmessung mit einem herkömmlich als Schallschutz eingesetzten Faservlies, das gleichfalls auf das verwendete gelochte Metallblech aufkaschiert war, durchgeführt. Das verwendete Lochblech hatte eine Dicke von 0,5 mm und die Lochdurchmesser betrugen 3 mm. Der Lochanteil an der Gesamtfläche des Metallbleches war 30 %. Die Verbindung zwischen den Schwammtüchern und dem Lochblech geschah durch punktweises Verkleben des jeweiligen Schwammtuches mit dem Lochblech. Der Abstand zwischen der Probenoberfläche und dem sogenannten schallharten Abschluss betrug 50 mm.

Die Untersuchungen erfolgten, wie schon erwähnt, nach DIN EN ISO 10534 "Akustik-Bestimmung des Schallabsorptionsgrades und der Impedanz in Impedanz-Rohren", Teil 1 betreffend "Verfahren mit Stehwellenverhältnissen", Ausgabe 10 / 2001. Das Kundt'schen Rohr hatte einen Durchmesser von 99 mm und eine Länge von 1000 mm. Die Schallabsorptionsgrade wurden im Frequenzbereich zwischen 400 Hertz und 2000 Hertz ermittelt. Die Messungen erfolgten gemäß Abschnitt 9.5 DIN EN ISO 10534-1 als Übersichtsmessungen, bei denen die Druckmaxima $P_{max}$ und Druckminima $P_{min}$ gemessen wurden. Aus diesen Werten wurden dann die Schallabsorptionsgrade $\alpha$ nach folgender Beziehung berechnet:

$$\alpha = \frac{4 \cdot 10^{\Delta L/20dB}}{(10^{\Delta L/20dB} + 1)^2}$$

In der Formel bedeuten:

$\alpha$ = Schallabsorptionsgrad, $\Delta L$ = Pegeldifferenz zwischen dem Druckmaximum und dem Druckminimum in dB.

Die Schallabsorptionsgrade des Rohrs bei schallhartem Abschluss ohne Prüfgegenstand lagen im Frequenzbereich von 400 Hertz bis 2000 Hertz zwischen $\alpha$ = 0,01 bis 0,04.

Dies bedeutet, dass auf Grund der gemessenen Schallabsorptionsgrade mit Prüfgegenstand eine Korrektur der Rohrdämpfung nicht erforderlich war.

In Tabelle 1 sind Flächengewichte der Schwammtücher, Messmethode DIN 53854, die Trockendicken, gemessen nach DIN 43855, 2N/10 cm$^2$ und die Wasseraufnahme, gemessen nach dem Prüfverfahren QM-PA19 für das Vergleichsbeispiel VB und die Ausführungsbeispiele B1 bis B6 nach der Erfindung zusammen gestellt.

Tabelle 1

|  | Flächengewicht [g/m$^2$] | Trockendicke [mm] | Wasseraufnahme [1/m$^2$] |
|---|---|---|---|
| VB | 75 $\pm$ 5 | 0,53 $\pm$ 0,02 | 1,00 $\pm$ 0,05 |
| B1 | 225 $\pm$ 35 | 2,3 $\pm$ 0,4 | > 4,0 |
| B2 | 260 $\pm$ 35 | 2,5 $\pm$ 0,5 | > 5,0 |
| B3 | 350 $\pm$ 50 | 3,0 $\pm$ 0,5 | > 5,5 |
| B4 | 600 $\pm$ 50 | 4,5 $\pm$ 0,5 | 10,0 $\pm$ 1,0 |
| B5 | 120 $\pm$ 20 | 1,0 $\pm$ 0,2 | 3,0 $\pm$ 0,4 |
| B6 | 80 $\pm$ 10 | 0,6 $\pm$ 0,1 | 2,0 $\pm$ 0,2 |

Die Messergebnisse Pmax und Pmin in dB sowie die berechneten Schallabsorptionsgrade sind in den nachfolgenden Tabellen für die verschiedenen Proben aufgeführt.

Die Tabellen 2 bis 4 enthalten in Abhängigkeit von dem Frequenzbereich 400 bis 2000 Hertz die jeweils gemessenen Werte $P_{max}$ (dB), $P_{min}$ (dB) und den Schallabsorptionsgrad $\alpha$.

Im Frequenzbereich von 630 bis 1250 Hertz beträgt der Schallabsorptionsgrad $\alpha$ 0,99 bis 0,60, wobei die höheren Werte $\alpha$ eher bei den niedrigen Frequenzbereichen angesiedelt sind.

Tabelle 2

| Frequenz [Hz] | $P_{max}$ [dB] | | | $P_{min}$ [dB] | | | Schallabsorptionsgrad $\alpha$ | | |
|---|---|---|---|---|---|---|---|---|---|
| | VB | B1 | B2 | VB | B1 | B2 | VB | B1 | B2 |
| 400 | 67 | 65 | 67 | 48 | 49 | 55 | 0,36 | 0,47 | 0,64 |
| 500 | 74 | 67 | 67 | 55 | 58 | 57 | 0,36 | 0,77 | 0,73 |
| 630 | 65 | 60 | 60 | 52 | 58 | 51 | 0,60 | 0,99 | 0,77 |
| 800 | 66 | 58 | 62 | 57 | 55 | 53 | 0,77 | 0,97 | 0,77 |
| 1000 | 59 | 57 | 62 | 47 | 52 | 53 | 0,64 | 0,92 | 0,77 |
| 1250 | 62 | 57 | 57 | 50 | 49 | 49 | 0,64 | 0,81 | 0,81 |
| 1600 | 56 | 42 | 45 | 39 | 32 | 35 | 0,43 | 0,73 | 0,73 |
| 2000 | 46 | 45 | 42 | 35 | 33 | 30 | 0,69 | 0,64 | 0,64 |

Tabelle 3

| Frequenz [Hz] | $P_{max}$ [dB] | | $P_{min}$ [dB] | | Schallabsorptionsgrad $\alpha$ | |
|---|---|---|---|---|---|---|
| | B3 | B4 | B3 | B4 | B3 | B4 |
| 400 | 64 | 68 | 57 | 55 | 0,85 | 0,60 |
| 500 | 67 | 68 | 58 | 56 | 0,77 | 0,64 |
| 630 | 60 | 60 | 53 | 48 | 0,85 | 0,64 |
| 800 | 62 | 62 | 53 | 50 | 0,77 | 0,64 |
| 1000 | 64 | 64 | 53 | 51 | 0,69 | 0,60 |
| 1250 | 60 | 57 | 48 | 46 | 0,64 | 0,69 |
| 1600 | 59 | 54 | 39 | 38 | 0,33 | 0,47 |
| 2000 | 46 | 47 | 31 | 33 | 0,51 | 0,55 |

Tabelle 4

| Frequenz [Hz] | $P_{max}$ [db] | | $P_{min}$ [dB] | | Schallabsorptionsgrad $\alpha$ | |
|---|---|---|---|---|---|---|
| | B5 | B6 | B5 | B6 | B5 | B6 |
| 400 | 66 | 67 | 56 | 48 | 0,73 | 0,36 |
| 500 | 66 | 71 | 58 | 57 | 0,81 | 0,55 |
| 630 | 60 | 64 | 52 | 53 | 0,81 | 0,69 |
| 800 | 63 | 65 | 54 | 58 | 0,77 | 0,85 |
| 1000 | 61 | 60 | 52 | 47 | 0,77 | 0,60 |
| 1250 | 57 | 60 | 50 | 52 | 0,85 | 0,81 |
| 1600 | 50 | 52 | 37 | 37 | 0,60 | 0,51 |
| 2000 | 44 | 47 | 30 | 36 | 0,55 | 0,69 |

Bei einer Frequenz f = 1600 Hertz weisen die Proben VB, B3, B4 und B6 ein Minimum des Schallabsorptionsgrades $\alpha$ auf, der für f = 2000 Hertz wieder ansteigt. Dieser Einbruch resultiert anscheinend aus den spezifischen Daten des verwendeten Kundt'schen Rohrs und es ist die Annahme gerechtfertigt, dass in der Praxis und bei Messungen des Schallabsorptionsgrades in einem Hallraum nach DIN EN 20354 ein derartiger Einbruch nicht zu erwarten ist. Der Verlauf des Schallabsorptionsgrades $\alpha$ für diese genannten Proben wird in der Praxis eher einen ähnlichen Verlauf aufweisen wie für die Proben B1, B2 und B5. Der Verlauf des Schallabsorptionsgrades $\alpha$ bei der Probe B2 ist gleichmäßig, so dass über den gesamten Frequenzbereich von 400 bis 2000 Hertz gute Schallabsorption erreicht wird. Die einzelnen Proben haben unterschiedliche Maxima der Schallabsorptionsgrade, so dass durch geeignete Wahl des Schwammtuches eine optimale Schallabsorption für einen gewünschten Frequenzbereich erzielbar ist. Nahezu alle Ausführungsbeispiele haben gemittelt über den untersuchten Frequenzbereich von 400 bis 2000 Hertz einen höheren mittleren Schallabsorptionsgrad $\alpha$ als die Vergleichsprobe aus einem herkömmlichen Faservlies.

Schallabsorptionsgrade vergleichbar mit denjenigen der Schwammtücher werden für Schwämme erhalten.

In Tabelle 5 sind Flächengewicht, Trockendicken und Wasseraufnahme von geeigneten Schwämmen zusammengestellt. Die Daten wurden nach den gleichen Methoden wie bei den Beispielen der Tabelle 1 gemessen.

Tabelle 5

| | Flächengewicht [g/m$^2$] | Trockendicke [mm] | Wasseraufnahme [l/m$^2$] |
|---|---|---|---|
| S1 | 501 | 14 | 14,0 |
| S2 | 877 | 23 | 20,6 |
| S3 | 596 | 21 | 18,1 |
| S4 | 1043 | 15 | > 22 |

(fortgesetzt)

|  | Flächengewicht [g/m²] | Trockendicke [mm] | Wasseraufnahme [l/m²] |
|---|---|---|---|
| S5 | 1041 | 14 | > 22 |

**Patentansprüche**

1. Schallschutzelement aus mindestens zwei Schichten, von denen eine Schicht (2) aus einem flexiblen Material dem Schallschutz dient und die andere Schicht eine Trägerschicht (3; 5; 6; 8) für das flexible Material ist, **dadurch gekennzeichnet, dass** das flexible Material der einen Schicht (2) aus Schwammtuch besteht, deren Hauptbestandteil regenerierte oder nichtderivatisierte Zellulose ist, und dass der Schicht (2) eine oder mehrere flammhemmende Substanzen zugesetzt sind.

2. Schallschutzelement nach Anspruch 1, **dadurch gekennzeichnet, dass** die Schicht (2) eine Trockendicke von 0,5 bis 23 mm aufweist, wobei die Schicht (2) bevorzugt aus einem im Trockenzustand 0,5 bis 8,0 mm dicken Schwammtuch besteht.

3. Schallschutzelement nach Anspruch 1, **dadurch gekennzeichnet, dass** das Flächengewicht des trockenen Schwammtuches 70 bis 700 g/m² beträgt.

4. Schallschutzelement nach Anspruch 1, **dadurch gekennzeichnet, dass** die Wasseraufnahme des Schwammtuches 1,8 bis 11 l/m² beträgt.

5. Schallschutzelement nach Anspruch 1, **dadurch gekennzeichnet, dass** das Schwammtuch aus regenerierter Zellulose, verstärkt durch Baumwollfasern, Viskosefasern oder ein Netz aus Kunststoff oder Baumwolle, besteht.

6. Schallschutzelement nach Anspruch 1, **dadurch gekennzeichnet, dass** das Schwammtuch auf Zellulosebasis aus nicht derivatisierter Zellulose besteht, hergestellt nach dem Aminoxidverfahren mit mindestens einem Porenbildner und gegebenenfalls durch Baumwollfasern, Viskosefasern oder ein Netz aus Kunststoff oder Baumwolle verstärkt ist.

7. Schallschutzelement nach Anspruch 1, **dadurch gekennzeichnet, dass** die Schicht (2) punktförmig auf die Trägerschicht (3; 5; 6; 8) aufgeklebt ist oder dass die Schicht (2) flächendeckend mit der Trägerschicht (3) verklebt ist.

8. Schallschutzelement nach Anspruch 1, **dadurch gekennzeichnet, dass** die Trägerschicht eine gelochte oder durchgehend vollflächige Gipskartonplatte (3; 5), eine Langlochplatte (6) aus Metall oder ein Netz (8) aus Baumwolle oder Kunststoff ist.

9. Schallschutzelement nach Anspruch 8, **dadurch gekennzeichnet, dass** der Lochanteil an der Trägerschicht 0 bis 40 % der Gesamtfläche der Trägerschicht beträgt.

10. Schallschutzelement nach Anspruch 1, **dadurch gekennzeichnet, dass** die Schicht (2) eine plane, nicht gelochte Schicht aus Schwammtuch ist.

11. Schallschutzelement nach Anspruch 8, **dadurch gekennzeichnet, dass** die Schicht (2) in Form von Streifen (7; 7) Löcher (4; 12) in der gelochten Gipskartonplatte (3) bzw. der Langlochplatte (6) abdeckt.

12. Schallschutzelement nach Anspruch 1, **dadurch gekennzeichnet, dass** drei Schichten vorhanden sind, nämlich zwei Schichten (2, 2) aus Schwammtuch und eine Trägerschicht (3; 5; 6; 8) und dass die Trägerschicht auf jeder Seite mit einer der Schichten aus Schwammtuch verbunden ist.

13. Schallschutzelement nach Anspruch 1, **dadurch gekennzeichnet, dass** die Schicht (2) schwer entflammbar gemäß der Brandschutzklasse B1 ausgerüstet ist, bevorzugt dadurch, dass eine oder mehrere flammhemmende Substanzen in einer Menge von 15 bis 25 Gew.-%, bezogen auf das Zellulosegewicht des Schwammtuches, zugesetzt sind, wobei die flammhemmenden Substanzen aus der Gruppe organische, halogenfreie Phosphorverbindungen, Borsalze, halogenierte Kohlenwasserstoffe auswählbar sind.

**14.** Schallschutzelement nach Anspruch 1, **dadurch gekennzeichnet, dass** im Frequenzbereich von 630 bis 1250 Hz der Schallabsorptionsgrad a 0,99 bis 0,60 beträgt.

**15.** Verfahren zur Ausrüstung einer Schicht aus flexiblem Material, das in einem Schallschutzelement gemäß Anspruch 1 Anwendung findet, mit flammhemmenden Substanzen, **dadurch gekennzeichnet, dass** auf ein Schwammtuch eine Dispersion aus einer oder mehreren flammhemmenden Substanzen durch Eintauchen des Schwammtuches in die Dispersion und anschließendes Trocknen aufgebracht wird oder dass eine Dispersion aus flammhemmende(r)n Substanz(en) zusammen mit Zellulose so aufbereitet wird, dass die Dispersion einer Spinnlösung der Viskose, aus der das Schwammtuch hergestellt wird, zugesetzt wird.

**Claims**

**1.** Sound insulation element comprising at least two layers whereof one layer (2) comprises a flexible material and provides the sound insulation and the other layer is a carrier layer (3; 5; 6; 8) for the flexible material, **characterized in that** the flexible material of said layer (2) consists of sponge cloth whose main constituent is regenerated or non-derivatized cellulose, and **in that** said layer (2) incorporates one or more flame-retardant substances added thereto.

**2.** Sound insulation element according to Claim 1, **characterized in that** said layer (2) has a dry thickness of 0.5 to 23 mm, wherein said layer (2) preferably consists of a sponge cloth from 0.5 to 8.0 mm in thickness in the dry state.

**3.** Sound insulation element according to Claim 1, **characterized in that** the basis weight of the dry sponge cloth is 70 to 700 $g/m^2$.

**4.** Sound insulation element according to Claim 1, **characterized in that** the water uptake of the sponge cloth is 1.8 to 11 $l/m^2$.

**5.** Sound insulation element according to Claim 1, **characterized in that** the sponge cloth consists of regenerated cellulose reinforced with cotton fibres, viscose fibres or a net formed of plastic or cotton.

**6.** Sound insulation element according to Claim 1, **characterized in that** the sponge cloth based on cellulose consists of non-derivatized cellulose obtained by the amine oxide process with at least one porogen and optionally reinforced with cotton fibres, viscose fibres or a net formed of plastic or cotton.

**7.** Sound insulation element according to Claim 1, **characterized in that** said layer (2) adheres to the carrier layer (3; 5; 6; 8) punctuately or **in that** said layer (2) adheres to the carrier layer (3) all over the area thereof.

**8.** Sound insulation element according to Claim 1, **characterized in that** the carrier layer is a perforate or entirely uninterrupted plasterboard panel (3; 5), an elongated-hole plate (6) formed of metal or a net (8) formed of cotton or plastic.

**9.** Sound insulation element according to Claim 8, **characterized in that** the proportion of the carrier layer which is accounted for by holes ranges from 0 to 40 % of the total surface area of the carrier layer.

**10.** Sound insulation element according to Claim 1, **characterized in that** said layer (2) is a planar, non-perforate layer of sponge cloth.

**11.** Sound insulation element according to Claim 8, **characterized in that** said layer (2) in the form of strips (7; 7) covers over holes (4; 12) in the perforate plasterboard (3) or, respectively, the elongated-hole plate (6).

**12.** Sound insulation element according to Claim 1, **characterized in that** there are three layers, namely two layers (2, 2) of sponge cloth and one carrier layer (3; 5; 6; 8), and **in that** the carrier layer attaches on each side to one of the layers of sponge cloth.

**13.** Sound insulation element according to Claim 1, **characterized in that** said layer (2) is low-flammable to Fire Protection Class B1, preferably as a result of incorporating one or more flame-retardant substances added thereto in an amount of 15 to 25 wt%, based on the cellulose weight of the sponge cloth, wherein the flame-retardant substances are selectable from the group consisting of organic halogen-free phosphorus compounds, boron salts and halogenated hydrocarbons.

14. Sound insulation element according to Claim 1, **characterized in that** the sound absorption degree α is 0.99 to 0.60 in the frequency range from 630 to 1250 Hz.

15. Process for endowing a layer of flexible material used in a sound insulation element according to Claim 1 with flame-retardant substances, **characterized in that** a dispersion of one or more flame-retardant substances is applied to a sponge cloth by dipping the sponge cloth into the dispersion and subsequent drying, or **in that** a dispersion of one or more flame-retardant substances is prepared together with cellulose such that the dispersion is added to a spinning solution of the viscose wherefrom the sponge cloth is produced.

**Revendications**

1. Élément d'insonorisation constitué d'au moins deux couches, parmi lesquelles une couche (2) en un matériau souple sert à l'insonorisation et l'autre couche est une couche de support (3; 5; 6; 8) pour le matériau souple, **caractérisé en ce que** le matériau souple de la couche (2) est une étoffe éponge dont le composant principal est de la cellulose régénérée ou non dérivée et **en ce qu'**une ou plusieurs substances ignifuges sont ajoutées à la couche (2).

2. Élément d'insonorisation selon la revendication 1, **caractérisé en ce que** la couche (2) a une épaisseur à sec de 0,5 à 23 mm, la couche (2) étant constituée de préférence d'une étoffe éponge épaisse de 0,5 à 8,0 mm à l'état sec.

3. Élément d'insonorisation selon la revendication 1, **caractérisé en ce que** le poids surfacique de l'étoffe éponge sèche est compris entre 70 et 700 g/m$^2$.

4. Élément d'insonorisation selon la revendication 1, **caractérisé en ce que** l'absorption d'eau de l'étoffe éponge est comprise entre 1,8 et 11 l/m$^2$.

5. Élément d'insonorisation selon la revendication 1, **caractérisé en ce que** l'étoffe éponge est en cellulose régénérée, renforcée par des fibres de coton, des fibres de viscose ou un treillis en plastique ou en coton.

6. Élément d'insonorisation selon la revendication 1, **caractérisé en ce que** l'étoffe éponge à base de cellulose est en cellulose non dérivée, fabriquée selon le procédé à l'oxyde d'amine avec au moins un agent porogène, et est renforcée le cas échéant par des fibres de coton, des fibres de viscose ou un treillis en plastique ou en coton.

7. Élément d'insonorisation selon la revendication 1, **caractérisé en ce que** la couche (2) est collée ponctuellement sur la couche de support (3; 5; 6; 8) ou **en ce que** la couche (2) est collée par toute sa surface à la couche de support (3).

8. Élément d'insonorisation selon la revendication 1, **caractérisé en ce que** la couche de support est un placoplâtre (3; 5) avec des trous ou avec une surface continue, une plaque à trous oblongs (6) en métal ou un treillis (8) en coton ou en plastique.

9. Élément d'insonorisation selon la revendication 8, **caractérisé en ce que** la proportion de trous sur la couche de support vaut de 0 à 40% de la surface totale de la couche de support.

10. Élément d'insonorisation selon la revendication 1, **caractérisé en ce que** la couche (2) est une couche plane, non trouée, en une étoffe éponge.

11. Élément d'insonorisation selon la revendication 8, **caractérisé en ce que** la couche (2) sous forme de bandes (7; 7) recouvre des trous (4; 12) dans le placoplâtre troué (3) ou dans la plaque à trous oblongs (6).

12. Élément d'insonorisation selon la revendication 1, **caractérisé en ce qu'**il y a trois couches, à savoir deux couches (2, 2) en une étoffe éponge et une couche de support (3; 5; 6; 8) et **en ce que** la couche de support est assemblée de chaque côté à l'une des couches en une étoffe éponge.

13. Élément d'insonorisation selon la revendication 1, **caractérisé en ce que** la couche (2) est difficilement inflammable selon la classe de protection anti-incendie B1, de préférence grâce au fait qu'une ou plusieurs substances ignifuges sont ajoutées pour une quantité allant de 15 à 25% en pourcentage pondéral du poids de cellulose de l'étoffe éponge, les substances ignifuges pouvant être choisies dans le groupe des composés phosphorés organiques sans halogène, des sels de bore, des hydrocarbures halogénés.

**14.** Élément d'insonorisation selon la revendication 1, **caractérisé en ce que**, dans la plage de fréquences de 630 à 1250 Hz, le coefficient d'absorption acoustique $\alpha$ vaut de 0,99 à 0,60.

**15.** Procédé d'apprêtage d'une couche en un matériau souple, qui est utilisée dans un élément d'insonorisation selon la revendication 1, avec des substances ignifuges, **caractérisé en ce que** l'on applique sur une étoffe éponge une dispersion d'une ou plusieurs substances ignifuges en plongeant l'étoffe éponge dans la dispersion puis en la séchant ou **en ce que** l'on prépare une dispersion à partir d'une ou plusieurs substances ignifuges conjointement avec de la cellulose de telle sorte que la dispersion est ajoutée à une solution à filer de la viscose à partir de laquelle est fabriquée l'étoffe éponge.

**Fig. 1**

**Fig. 2**

**Fig. 3**

## Fig. 4

7

4; 12

3; 6

## Fig. 5

10

8

2

2

## Fig. 6

4

11

11

3

4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19635214 C2
- DE 19954779 A1
- JP 8087278 A
- EP 035794 B1

**In der Beschreibung aufgeführte Nicht-Patentliteratur**

- Akustik-Bestimmung des Schallabsorptionsgrades und der Impedanz in Impedanz-Rohren. Verfahren mit Stehwellenverhältnissen. 2001